# EUROPEAN PATENT APPLICATION

(11) **EP 3 156 908 A1**
(43) Date of publication of application: **19.04.2017**
(21) Application number: 15807263.7
(22) Date of filing: 08.06.2015
(51) Int. Cl.: G06F 13/14

(54) **USER TERMINAL, METHOD FOR CONTROLLING SAME, AND MULTIMEDIA SYSTEM**

(30) Priority: 11.06.2014 KR 20140070979
(71) Applicant: Samsung Electronics Co., Ltd., Suwon-si, Gyeonggi-do 443-742 (KR)
(72) Inventor: KYOUN, Jae-ki, Yongin-si Gyeonggi-do 446-956 (KR); KO, Chang-seog, Hwaseong-si Gyeonggi-do 445-983 (KR); PHANG, Joon-ho, Seoul 135-806 (KR); LEE, Kwan-min, Seoul 135-927 (KR)
(74) Representative: Hewett, Jonathan Michael Richard
(86) International application number: PCT/KR2015/005722
(87) International publication number: WO 2015/190781

(57) **Abstract**

Disclosed are a user terminal, a method for controlling the same, and a multimedia system. The method for controlling the user terminal includes: displaying a first image content; transmitting a signal requesting an image content to an external display device in the case in which a preset user interaction is sensed; and displaying the first image content and a second image content together in the case in which the second image content that is currently being displayed by the display device is received from the display device.

## Description

### BACKGROUND OF THE INVENTION

### Field of the Invention

Apparatuses and methods consistent with the present disclosure relate to a user terminal, a method for controlling the same, and a multimedia system, and more particularly, to a user terminal capable of simultaneously viewing image contents displayed by a display device, a method for controlling the same, and a multimedia system.

### Description of the Related Art

Currently, display devices provide various contents to users. Particularly, viewers intend to simultaneously confirm various image contents and select contents that they want to view among the confirmed image contents.

Conventionally, there was a method for simultaneously confirming a plurality of image contents using a picture in picture (PIP) function. In this case, a viewing hindrance phenomenon that one image content hides other image contents may occur. In addition, a problem that it is difficult to simultaneously control an original image content and a PIP image content using one remote controller has occurred.

Further, there was a method for simultaneously confirming a plurality of image contents using a plurality of display devices. For example, there was a method for confirming image contents using a television (TV) and a smart phone, respectively. In this case, the plurality of display devices do not interwork with each other, such that the plurality of display devices should be individually controlled, which is troublesome.

### SUMMARY OF THE INVENTION

The present disclosure provides a user terminal capable of more intuitively controlling a display device by confirming a content that is currently being reproduced by the display device using the user terminal, a method for controlling the same, and a multimedia system.

According to an aspect of the present disclosure, a method for controlling a user terminal includes: displaying a first image content; transmitting a signal requesting an image content to an external display device in the case in which a preset user interaction is sensed; and displaying the first image content and a second image content together in the case in which the second image content that is currently being displayed by the display device is received from the display device.

The preset user interaction may be a drag interaction touching an upper region of a touch screen of the user terminal and then performing a drag in a downward direction, and in the displaying of the first image content and the second image content together, a display amount of the second image content may be decided depending on a drag amount of the drag interaction, and a portion of the second image content may be displayed together with the first image content depending on the decided display amount.

In the displaying of the first image content and the second image content together, the second image content may be reduced and displayed on a region corresponding to a direction toward which the user touch is turned and the first image content may be reduced and displayed on a region corresponding to an opposite direction to the direction toward which the user touch is turned, in the case in which a drag interaction turning the user touch toward one of left and right directions in a process in which the user touch moves in the downward direction is sensed.

In the displaying of the first image content and the second image content together, the second image content may be displayed over an entire screen and the first image content may be removed, in the case in which the user touch is dragged by a preset distance or more in the downward direction while the first image content and the second image content are simultaneously displayed depending on the drag interaction.

The method for controlling a user terminal may further include changing a touched image content into another image content and displaying the changed image content, when a drag interaction touching one of the first image content and the second image content and then performing a drag in one of left and right directions is sensed.

In the case in which the first image content and the second image content are broadcasting contents, in the changing of the touched image content into another image content and the displaying of the changed image content, the touched broadcasting content may be changed into a broadcasting content of a channel different from a channel corresponding to the touched broadcasting content depending on a direction of the drag interaction and the changed broadcasting content may be displayed.

The method for controlling a user terminal may further include: displaying a content list in the vicinity of the first image content and the second image content in the case in which a preset user command is input; and changing a dragged image content into a third image content and displaying the third image content, in the case in which a drag interaction touching the third image content of a plurality of image contents included in the content list and then performing a drag to one of the first image content and the second image content is sensed.

The method for controlling a user terminal may further include transmitting information on the first image content to the display device in the case in which a user command touching the first image content and then performing a drag in an upward direction is input, wherein the display device displays the first image content on a display screen in the case in which the information on the first image content is received.

The method for controlling a user terminal may further include transmitting information on the first image content and the second image content to the display device in the case in which a user command touching a boundary line between the first image content and the second image content and then performing a drag in an upward direction is input, wherein the display device simultaneously displays the first image content and the second image content on a display screen in the case in which the information on the first image content and the second image content is received.

In the displaying of the first image content, an image stream for the first image content may be received from the display device and be displayed, and in the changing of the touched image content into another image content and the displaying of the changed image content, an image stream in which the first image content and the second image content are multiplexed may be received from the display device and be displayed.

The display device may display the second image content while the user terminal displays the first image content and the second image content, and the display device and the user terminal may synchronize and display the second image contents with each other using timestamp information included in metadata of the second image content.

According to another aspect of the present disclosure, a user terminal interworking with a display device includes: a display displaying a first image content; a communicator performing communication with the display device; a sensor sensing a user interaction; and a controller controlling the communicator to transmit a signal requesting an image content to the display device in the case in which a preset user interaction is sensed through the sensor and controlling the display to display the first image content and a second image content together in the case in which the second image content that is currently being displayed by the display device is received from the display device.

The preset user interaction may be a drag interaction touching an upper region of a touch screen of the user terminal and then performing a drag in a downward direction, and the controller may decide a display amount of the second image content depending on a drag amount of the drag interaction, and control the display to display a portion of the second image content together with the first image content depending on the decided display amount.

The controller may control the display to reduce and display the second image content on a region corresponding to a direction toward which the user touch is turned and reduce and display the first image content on a region corresponding to an opposite direction to the direction toward which the user touch is turned in the case in which a drag interaction turning the user touch toward one of left and right directions in a process in which the user touch moves in the downward direction is sensed through the sensor.

The controller may control the display to display the second image content over an entire screen and remove the first image content, in the case in which the user touch is dragged by a preset distance or more in the downward direction while the first image content and the second image content are simultaneously displayed depending on the drag interaction.

The controller may control the display to change a touched image content into another image content and display the changed image content, when a drag interaction touching one of the first image content and the second image content and then performing a drag in one of left and right directions is sensed through the sensor.

In the case in which the first image content and the second image content are broadcasting contents, the controller may control the display to change the touched broadcasting content into a broadcasting content of a channel different from a channel corresponding to the touched broadcasting content depending on a direction of the drag interaction and display the changed broadcasting content.

The controller may control the display to display a content list in the vicinity of the first image content and the second image content in the case in which a preset user command is input, and control the display to change a dragged image content into a third image content and display the third image content, in the case in which a drag interaction touching the third image content of a plurality of image contents included in the content list and then performing a drag to one of the first image content and the second image content is sensed.

The controller may control the communicator to transmit information on the first image content to the display device in the case in which a drag interaction touching the first image content and then performing a drag in an upward direction is sensed through the sensor, and the display device may display the first image content on a display screen in the case in which the information on the first image content is received.

The controller may control the communicator to transmit information on the first image content and the second image content to the display device in the case in which a drag interaction touching a boundary line between the first image content and the second image content and then performing a drag in an upward direction is sensed through the sensor, and the display device may simultaneously display the first image content and the second image content on a display screen in the case in which the information on the first image content and the second image content is received.

The controller may control the display to process a received image stream to display the first image content in the case in which an image stream for the first image content is received from the display device through the communicator, and control the display to process a multiplexed image stream to display the first image content and the second image content in the case in which an image stream in which the first image content and the second image content are multiplexed is received from the display device through the communicator.

The display device may display the second image content while the user terminal displays the first image content and the second image content, and the display device and the user terminal may synchronize and display the second image contents with each other using timestamp information included in metadata of the second image content.

According to still another aspect of the present disclosure, a user terminal interworking with a display device includes: a display displaying a plurality of image contents; a communicator performing communication with the display device; a sensor sensing a user interaction; and a controller controlling the communicator to transmit a signal requesting an image content to the display device in the case in which a preset user interaction is sensed through the sensor and controlling the display to display the plurality of image contents and another image content together in the case in which another image content that is currently being displayed by the display device is received from the display device through the communicator.

According to yet still another aspect of the present disclosure, a user terminal interworking with a display device includes: a display displaying a plurality of image contents; a communicator performing communication with the display device; a sensor sensing a user interaction; and a controller controlling the display to display the plurality of received image contents in the case in which the plurality of image contents are received in the display device and controlling the communicator to transmit information on an image content for which a preset user interaction is sensed to the display device in the case in which the preset user interaction for one of the plurality of image contents is sensed through the sensor.

According to yet still another aspect of the present disclosure, a method for controlling a multimedia system includes: a user terminal displaying a first image content; a display device displaying a second image content; the user terminal transmitting a signal requesting an image content to the display device in the case in which a preset user interaction is sensed; the display device transmitting the second image content in response to the request signal; and the user terminal displaying the first image content and the received second image content together in the case in which the second image content is received from the display device.

According to various exemplary embodiments of the present disclosure as described above, a user may more intuitively control the display device using the user terminal, and may simultaneously view various image contents using the user terminal and the display device.

### BRIEF DESCRIPTION OF THE DRAWING FIGURES

FIG. 1 is a view illustrating a multimedia system according to an exemplary embodiment of the present disclosure;
FIG. 2 is a block diagram schematically illustrating a configuration of a user terminal according to an exemplary embodiment of the present disclosure;
FIG. 3 is a block diagram illustrating a configuration of a user terminal according to an exemplary embodiment of the present disclosure in detail;
FIGS. 4A to 4F are views for describing a method in which a user terminal displays an image content that is currently being displayed by a display device according to an exemplary embodiment of the present disclosure;
FIGS. 5A to 5C are views for describing a method in which a user terminal changes one of a plurality of image contents into another image content according to an exemplary embodiment of the present disclosure;
FIGS. 6A to 6D are views for describing a method for changing one of a plurality of image contents into another image content using a content list according to an exemplary embodiment of the present disclosure;
FIGS. 7A to 7C are views for describing a method in which a display device synchronizes and reproduces an image content with one of a plurality of image contents displayed by a user terminal, according to an exemplary embodiment of the present disclosure;
FIGS. 8A to 8C are views for describing a method in which a display device synchronizes and reproduces an image content with one of a plurality of image contents displayed by a user terminal, according to an exemplary embodiment of the present disclosure;
FIG. 9 is a block diagram illustrating a display device according to an exemplary embodiment of the present disclosure;
FIG. 10 is a flow chart for describing a method for controlling a user terminal according to an exemplary embodiment of the present disclosure;
FIG. 11 is a sequence view for describing a method for controlling a multimedia system according to an exemplary embodiment of the present disclosure; and
FIGS. 12A and 12B are views for describing an example in which a user terminal simultaneously displays three or more image contents according to another exemplary embodiment of the present disclosure.

### DETAILED DESCRIPTION OF THE EXEMPLARY EMBODIMENTS

The present disclosure may be variously modified and have several exemplary embodiments. Therefore, specific exemplary embodiments of the present disclosure will be illustrated in the accompanying drawings and be described in detail in the present specification. However, it is to be understood that the present disclosure is not limited to a specific exemplary embodiment, but includes all modifications, equivalents, and substitutions without departing from the scope and spirit of the present disclosure. When it is decided that the detailed description of the known art related to the present disclosure may obscure the gist of the present disclosure, a detailed description therefor will be omitted.

Terms 'first', 'second', and the like, may be used to describe various components, but the components are not to be construed as being limited by the terms. The terms are used to distinguish one component from another component.

Terms used in the present specification are used only in order to describe specific exemplary embodiments rather than limiting the scope of the present disclosure. Singular forms are intended to include plural forms unless the context clearly indicates otherwise. It will be further understood that the terms "comprises" or "configured of" used in this specification, specify the presence of features, numerals, steps, operations, components, parts mentioned in this specification, or a combination thereof, but do not preclude the presence or addition of one or more other features, numerals, steps, operations, components, parts, or a combination thereof.

In the exemplary embodiments, a 'module' or a 'unit' may perform at least one function or operation, and be implemented by hardware or software or be implemented by a combination of hardware and software. In addition, a plurality of 'modules' or a plurality of 'units' may be integrated in at least one module and be implemented by at least one processor (not illustrated) except for a 'module' or a 'unit' that needs to be implemented by specific hardware.

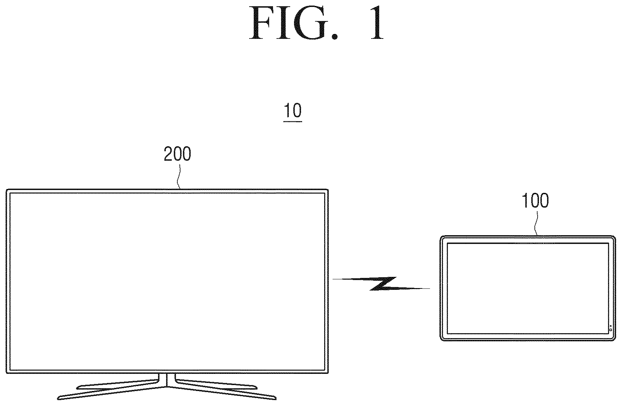

Hereinafter, various exemplary embodiments of the present disclosure will be described in detail with reference to the accompanying drawings. FIG. 1 is a view illustrating a multimedia system 10 according to an exemplary embodiment of the present disclosure. As illustrated in FIG. 1, the multimedia system 10 includes a user terminal 100 and a display device 200. Here, the user terminal 100 may be a separate remote controller including a touch screen for controlling the display device 200. However, this is only an example, and the user terminal 100 may be various portable user terminals such as a smart phone, a tablet personal computer (PC), and the like. In addition, the display device 200 may be a smart television (TV). However, this is only an example, and the display device 200 may be various display devices such as a digital TV, a desktop PC, a laptop PC, and the like.

The user terminal 100 and the display device 200 may be connected to each other through various communication schemes. For example, the user terminal 100 and the display device 200 may perform communication therebetween using a wireless communication module such as Bluetooth, WiFi, or the like.

In addition, the user terminal 100 and the display device 200 may display a first image content and a second image content, respectively. Here, the first image content displayed by the user terminal 100 may be received from the display device 200. However, this is only an example, and the first image content may be received from a separate external apparatus or be a pre-stored image content. In addition, the first image content and the second image content may be broadcasting contents. However, this is only an example, the first image content and the second image content may be video on demand (VOD) image contents received from the Internet or pre-stored image contents.

In the case in which a user interaction preset by a user is sensed while the user terminal 100 displays the first image content, the user terminal 100 may transmit a signal requesting a content to the external display device 200. Here, the preset user interaction may be a drag interaction touching an upper region of the user terminal 100 and then performing a drag in a downward direction.

In the case in which the user terminal 100 receives the second image content that is currently being displayed by the display device 200 from the display device 200, the user terminal 100 may display the first image content and the second image content together.

In detail, the user terminal 100 may determine a display amount of the second image content depending on a drag amount of the drag interaction, and display at least a portion of the second image content together with the first image content depending on the determined display amount. In addition, in the case in which a drag interaction performing the drag in the downward direction and then turning the user touch toward one of left and right directions is sensed, the user terminal 100 may reduce and display the second image content on a region corresponding to the direction toward which the user touch is turned, and reduce and display the first image content on a region corresponding to an opposite direction to the direction toward which the user touch is turned. However, in the case in which the drag is performed by a preset distance or more in the downward direction, the user terminal 100 may remove the first image content from a display screen and display the second image content over the entire screen.

In addition, the user terminal 100 may change at least one of the first image content and the second image content into another image content using a user interaction while simultaneously displaying the first image content and the second image content. As an exemplary embodiment of the present disclosure, in the case in which a drag interaction touching one of the first image content and the second image content and then performing a drag in left and right directions is sensed, the user terminal 100 may change the touched image content into another image content. In addition, in the case in which a preset user command is input while the user terminal 100 simultaneously displays the first image content and the second image content, the user terminal 100 may display a content list on one region of the display screen and change the image content depending on a user interaction using the content list.

In addition, in the case in which a preset user interaction is sensed while the user terminal 100 simultaneously displays the first image content and the second image content, the user terminal 100 may transmit information on an image content for which the user interaction is sensed to the display device 200. In the case in which the information on the image content is received, the display device 200 may display the image content corresponding to the received information.

The user may more intuitively control the display device 200 using the user terminal 100, and may simultaneously view various image contents using the user terminal 100 and the display device 200, by the multimedia system 10 as described above.

Meanwhile, although a case in which the user terminal 100 simultaneously displays two image contents has been described in the exemplary embodiment described above, this is only an example. That is, the user terminal 100 may simultaneously display three or more image contents.

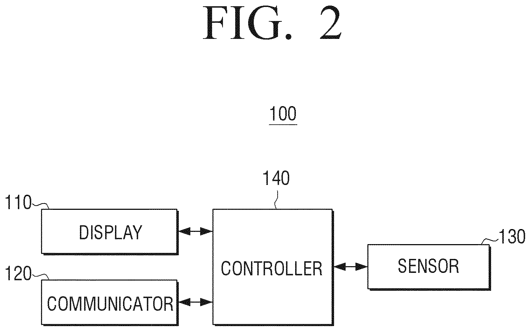

Next, the user terminal 100 will be described in more detail with reference to FIGS. 2 to 8C.

FIG. 2 is a block diagram schematically illustrating a configuration of a user terminal 100 according to an exemplary embodiment of the present disclosure. As illustrated in FIG. 2, the user terminal 100 includes a display 110, a communicator 120, a sensor 130, and a controller 140.

The display 110 displays various image contents by a control of the controller 140. Particularly, the display 110 may display image contents received from the display device 200. Here, in the case in which an image stream for the first image content is received from the display device 200, the display 110 may display the first image content, and in the case in which an image stream in which the first image content and the second image content are multiplexed is received from the display device 200, the display 110 may simultaneously display the first image content and the second image content.

Meanwhile, the display 110 may be combined with a touch sensor of the sensor 130 to thereby be a touch screen.

The communicator 120 performs communication with various external apparatuses. Particularly, the communicator 120 may perform communication with the display device 200. In this case, the communicator 120 may receive an image content from the display device 200 in real time, and transmit a content request signal requesting the image content to the display device 200.

The sensor 130senses a user interaction for controlling the user terminal 100. Particularly, the sensor 120 may be a touch sensor that may be provided in a touch screen and sense a touch interaction (particularly, a drag interaction) of the user.

The controller 140 controls a general operation of the user terminal 100. Particularly, in the case in which a preset user interaction is sensed through the sensor 130 while the display 110 displays the first image content, the controller 140 may control the communicator 120 to transmit a signal requesting an image content to the display device 200, and in the case in which the second image content that is currently being displayed by the display device 200 is received from the display device 200, the controller 140 may control the display 110 to display the first image content and the received second image content together.

In detail, the controller 140 may control the display 110 to display the first image content received from the display device 200. In this case, the display device 200 may display the second image content different from the first image content.

In the case in which a preset user interaction is sensed while the first image content is displayed, the controller 140 may control the communicator 120 to transmit a signal requesting the second image content that is currently being displayed by the display device 200 to the display device 200. Here, the preset user interaction may be a drag interaction touching an upper region of a touch screen of the user terminal 100 and then performing a drag in a downward direction.

In addition, in the case in which the second image content responding to the request signal is received from the display device 200, the controller 140 may control the display 110 to display the received second image content and the first image content together. In detail, in the case in which the display device 200 receives the request signal, the display device 200 may multiplex the first image content and the second image content to generate an image stream, and transmit the generated image stream to the user terminal 100. The user terminal 100 may demultiplex the received image stream to separate the received image stream into the first image content and the second image content, and process the separated first image content and second image content to simultaneously display the first image content and the second image content on one screen.

Particularly, in the case in which the drag interaction touching the upper region of the touch screen and then performing the drag in the downward direction is sensed, the controller 140 may decide a display amount of the second image content depending on a drag amount of the drag interaction, and control the display 110 to display a portion of the second image content together with the first image content depending on the decided display amount. That is, the controller 140 may increase the display amount of the second image content as the drag amount in the downward direction is increased.

In addition, in the case in which a drag interaction turning the user touch toward one of left and right directions in a process in which the user touch moves in the downward direction is sensed through the sensor 130, the controller 140 may control the display 110 to reduce and display the second image content on a region corresponding to the direction toward which the user touch is turned and reduce and display the first image content on a region corresponding to an opposite direction to the direction toward which the user touch is turned. For example, in the case in which a drag interaction turning the user touch toward the left direction in a process in which the user touch moves in the downward direction is sensed, the controller 140 may control the display 110 to reduce and display the second image content on a left region and reduce and display the first image content on a right region.

However, in the case in which the user touch is dragged by a preset distance or more in the downward direction while the first image content and the second image content are displayed together depending on the drag interaction, the controller 140 may control the display 110 to display the second image content over the entire screen and remove the first image content.

Particularly, in the case in which the user terminal 100 displays the second image content, the controller 140 may control the display 110 to synchronize and display the second image content with the second image content displayed by the display device 200 using timestamp information included in metadata of the image content.

Therefore, the user terminal 100 may intuitively confirm the image content that is currently being displayed by the external display device 200 through the process described above.

In addition, the controller 140 may change at least one of the first image content and the second image content into another image content depending on a preset user interaction while the first image content and the second image content are simultaneously displayed.

In detail, when a drag interaction touching one of the first image content and the second image content and then performing a drag in one of the left and right directions is sensed through the sensor 130 while the first image content and the second image content are simultaneously displayed, the controller 140 may control the display 110 to change the touched image content into another image content and display the changed image content. Particularly, in the case in which the first image content and the second image content are broadcasting contents, the controller 140 may control the display 110 to change a touched broadcasting content into a broadcasting content of a channel different from a channel corresponding to the touched broadcasting content depending on a direction of the drag interaction and display the changed broadcasting content. For example, in the case in which a drag interaction in the left direction is sensed, the controller 140 may control the display 110 to change the broadcasting content so as to decrease a channel number and display the changed broadcasting content.

In addition, in the case in which a preset user command (for example, a command through which a preset button of a remote controller is selected) is input while the first image content and the second image content are displayed, the controller 140 may control the display 110 to display a content list in the vicinity of the first image content and the second image content. In addition, the controller 140 may change at least one of the first image content and the second image content into another image content through a drag-and-drop operation.

In addition, the controller 140 may control the communicator 120 to transmit information on an image content for which a preset user interaction is sensed to the display device 200 so that the display device 200 displays one of a plurality of image contents that is currently being displayed by the user terminal 100 depending on the preset user interaction.

In detail, in the case in which a drag interaction touching the first image content and then performing a drag in an upward direction is sensed through the sensor 130, the controller 140 may control the communicator 120 to transmit information on the first image content to the display device 200. In the case in which the information on the first image content is received, the display device 200 may display the first image content on a display screen.

In addition, in the case in which a drag interaction touching a boundary line between the first image content and the second image content and then performing a drag in the upward direction is sensed through the sensor 130, the controller 140 may control the communicator 120 to transmit information on the first image content and the second image content to the display device 200. In the case in which the information on the first image content and the second image content is received, the controller 140 may control the display to simultaneously display the first image content and the second image content on a display screen.

Through the process described above, the user may more intuitively perform a control so that the display device 200 may display an image viewed on the user terminal 100.

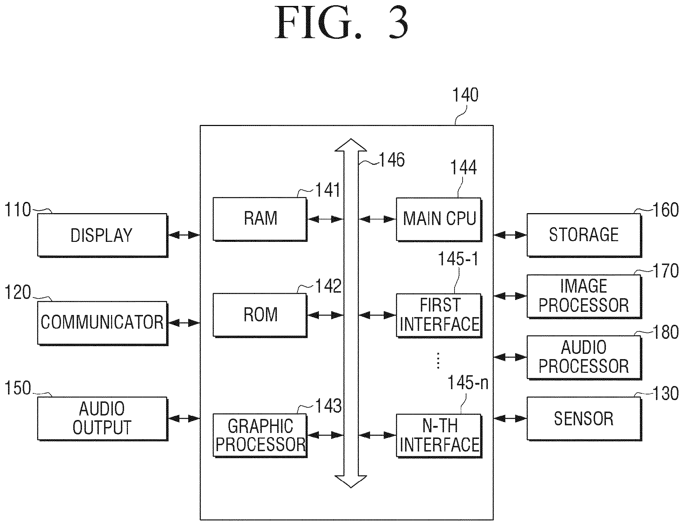

FIG. 3 is a block diagram illustrating a configuration of a user terminal 100 according to an exemplary embodiment of the present disclosure in detail. As illustrated in FIG. 3, the user terminal 100 includes the display 110, the communicator 120, an audio output 150, a storage 160, an image processor 170, an audio processor 180, the sensor 130, and the controller 140.

Meanwhile, FIG. 3 generally illustrates various components in the case in which the user terminal 100 is a device having various functions such as a content providing function, a display function, a communication function, and the like, by way of example. Therefore, in another exemplary embodiment, some of the components illustrated in FIG. 3 may be omitted or changed and other components may also be added.

The display 110 displays at least one of a video frame rendered by processing image data received through the communicator 120 in the image processor 170 and various screens rendered in a graphic processor 143. Particularly, the display 110 may display at least one broadcasting content received from the external display device 200. In detail, in the case in which an image stream including a first broadcasting content is received, the display 110 may display the first broadcasting content processed by the image processor 170. Alternatively, in the case in which an image stream in which a first broadcasting content and a second broadcasting content are multiplexed is received, the display 110 may simultaneously display the first and second broadcasting contents processed by the image processor 170.

The communicator 120 is a component performing communication with various types of external apparatuses in various types of communication schemes. The communicator 120 may include various communication chips such as a WiFi chip, a Bluetooth chip, a near field communication (NFC) chip, a wireless communication chip, and the like. Here, the WiFi chip, the Bluetooth chip, and the NFC chip perform communication in a WiFi scheme, a Bluetooth scheme, an NFC scheme, respectively. Among them, the NFC chip means a chip operated in the NFC scheme using a band of 13.56MHz among various RFID frequency bands such as 135kHz, 13.56MHz, 433MHz, 860∼960MHz, 2.45GHz, and the like. In the case of using the WiFi chip or the Bluetooth chip, various connection information such as an SSID, a session key, and the like, is first transmitted and received and communication is connected by using the connection information. Then, various information may be transmitted and received. The wireless communication chip means a chip performing communication depending on various communication protocols such as IEEE, Zigbee, 3rd generation (3G), 3rd generation partnership project (3GPP), long term evolution (LTE), and the like.

Particularly, the communicator 120 may receive the image stream including the broadcasting content from the display device 200. In addition, the communicator 120 may transmit information on an image content that the user intends to view through the display device 200 to the display device 200 depending on a user interaction.

Further, the communicator 120 may receive various image contents such as a VOD content from an external server.

The audio output 150 is a component outputting various alarms or audio messages as well as various audio data on which various processes such as decoding, amplification, noise filtering, and the like, are performed by the audio processor 180. Particularly, in the case in which the display device 200 displays a plurality of image contents, the audio output 150 may output an audio corresponding to one image content selected by the user among the plurality of image contents.

The storage 160 stores various modules for driving the user terminal 100 therein. For example, software including a base module, a sensing module, a communication module, a presentation module, a web browser module, and a service module may be stored in the storage 160. Here, the base module is a base module processing signals transferred from each hardware included in the user terminal 100 and transferring the processed signals to an upper layer module. The sensing module, which is a module collecting information from various sensors and analyzing and managing the collected information, may include a face recognizing module, an audio recognizing module, a motion recognizing module, an NFC recognizing module, and the like. The presentation module, which is a module for configuring a display screen, may include a multimedia module for reproducing and outputting a multimedia content and a user interface (UI) rendering module performing UI and graphic processing. The communication module is a module for performing communication with the outside. The web browser module is a module performing web browsing to access a web server. The service module is a module including various applications for providing various services.

As described above, the storage 160 may include various program modules. However, some of various program modules may be omitted, modified, or added depending on a kind and a property of user terminal 100. For example, in the case in which the user terminal 100 is a smart phone, a position deciding module for deciding a position based on a global positioning system (GPS) may be further included in the base module and a sensing module sensing an operation of the user may be further included in the sensing module.

In addition, the storage 160 may include a buffer temporally storing an image content therein so that the user terminal 100 and the display device 200 may synchronize and reproduce the image contents with each other. The image content stored in the buffer may be output to the display 110 depending on timestamp information of the image content.

The image processor 170 is a component performing processing for the image stream including the image content, received through the communicator 120. In the image processor 170, various kinds of image processing such as decoding, demultiplexing, scaling, noise filtering, frame rate converting, resolution converting, and the like, for the image stream may be performed.

The audio processor 180 is a component performing processing for audio data of the image content. In the audio processor 180, various kinds of processing such as decoding, amplifying, noise filtering, and the like, for the audio data may be performed. The audio data processed in the audio processor 180 may be output to the audio output 150.

The sensor 130 may sense various user interactions for controlling components of the user terminal 100. Particularly, the sensor 130 may be a touch sensor for sensing a touch interaction of the user. Here, the touch sensor may be disposed on a rear surface of the display 110 to thereby be a touch screen.

The controller 140 controls a general operation of the user terminal 100 using various programs stored in the storage 160.

The controller 140 includes a random access memory (RAM) 141, a read only memory (ROM) 142, a graphic processor 143, a main central processing unit (CPU) 144, first to n-th interfaces 145-1 to 145-n, and a bus 146, as illustrated in FIG. 3. Here, the RAM 141, the ROM 142, the graphic processor 143, the main CPU 144, the first to n-th interfaces 145-1 to 145-n, and the like, may be connected to each other through the bus 146.

An instruction set for booting a system, or the like, is stored in the ROM 142. When a turn-on command is input to supply power, the main CPU 144 may copy an operating system (O/S) stored in the storage 160 to the RAM 141 depending on an instruction stored in the ROM 142, and execute the O/S to boot the system. When the booting is completed, the main CPU 144 copies various application programs stored in the storage 160 to the RAM 141, and executes the application programs copied to the RAM 141 to perform various operations.

The graphic processor 143 renders a screen including various objects such as a pointer, an icon, an image, a text, and the like, using a calculator (not illustrated) and a renderer (not illustrated). The calculator calculates attribute values such as coordinate values at which the respective objects will be displayed, forms, sizes, colors, and the like, of the respective objects depending on a layout of a screen using a control command received from an input. The renderer renders screens of various layouts including objects on the basis of the attribute values calculated in the calculator. The screen rendered in the renderer is displayed on a display region of the display 110.

The main CPU 144 accesses the storage 160 to perform booting using the O/S stored in the storage 160. In addition, the main CPU 144 performs various operations using various programs, contents, data, and the like, stored in the storage 160.

The first to n-th interfaces 145-1 to 145-n are connected to the various components described above. One of the interfaces may be a network interface connected to an external device through a network.

Particularly, in the case in which a preset user interaction is sensed through the sensor 130, the controller 140 may control the communicator 120 to transmit a content request signal requesting an image content that is currently being displayed by the display device 200 to the display device 200, and in the case in which the second image content that is currently being displayed by the display device 200 is received from the display device 200, the controller 140 may control the display 110 to display the first image content and the received second image content together.

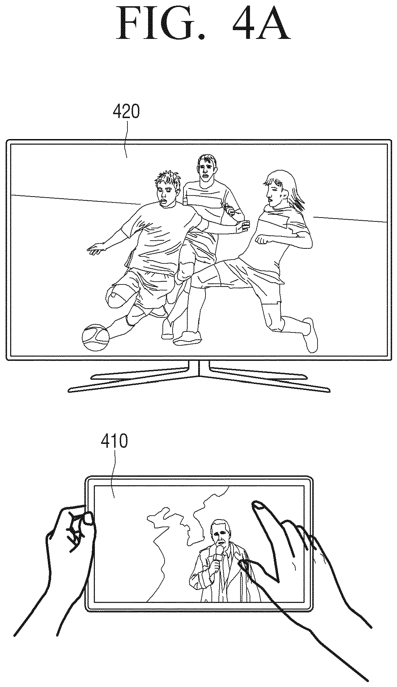

Next, a function of the controller 140 will be described in more detail with reference to FIGS. 4A to 8C. For reference, a case in which an image content is a broadcasting content will be described in the present exemplary embodiment.

First, as illustrated in FIG. 4A, the user terminal 100 displays a first broadcasting content 410, and the display device 200 displays a second broadcasting content 420. Here, the first broadcasting content 410 received by the user terminal 100 may be a broadcasting content received from the display device 200.

In the case in which a drag interaction of a user touching an upper region of a touch screen and then performing a drag in a downward direction is sensed while the user terminal 100 displays the first broadcasting content 410, the controller 140 may control the communicator 120 to transmit a content request signal requesting the second broadcasting content 420 to the display device 200.

In the case in which an image stream in which the first broadcasting content 410 and the second broadcasting content 420 are multiplexed is received from the display device 200, the controller 140 may control the image processor 170 to demultiplex the multiplexed image stream and then perform image processing.

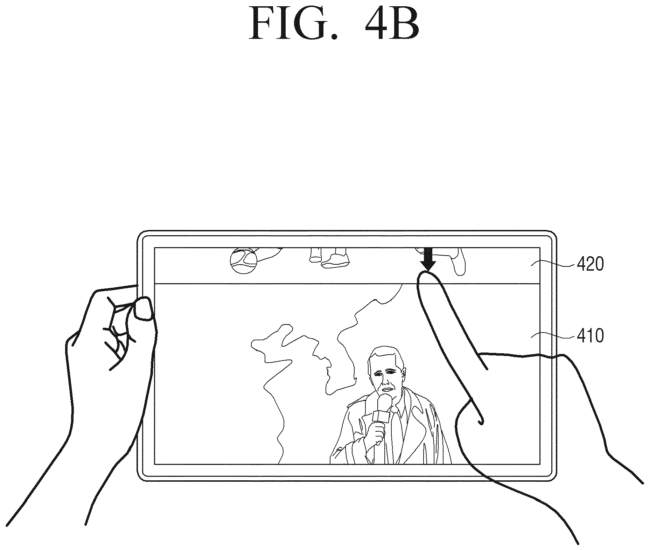

In addition, the controller 140 may control the display 110 to display the processed second broadcasting content 420 on an upper region of the display 110, as illustrated in FIG. 4B, depending on the drag interaction.

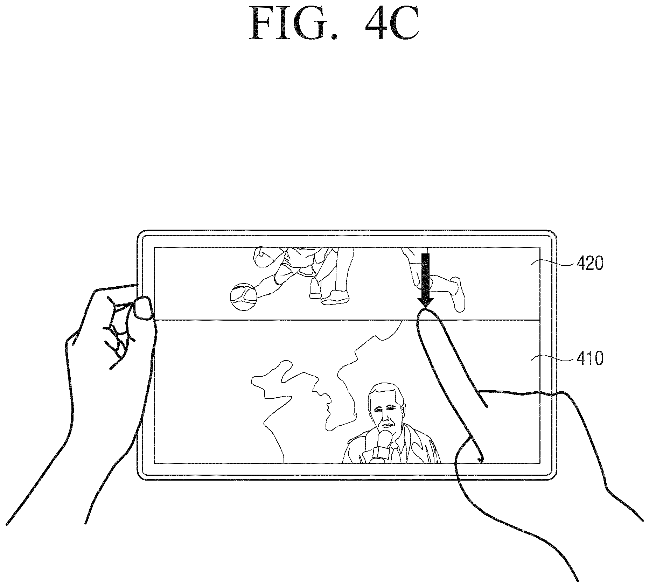

Here, the controller 140 may decide a display amount of the second broadcasting content 420 depending on a drag amount of the drag interaction in the downward direction. In addition, the controller 140 may control the display 110 to display the second broadcasting content 420 depending on the decided display amount. In detail, the controller 140 may control the display 110 so that the display amount of the second broadcasting content is increased, as illustrated in FIGS. 4B and 4C, as the drag interaction gradually progresses in the downward direction.

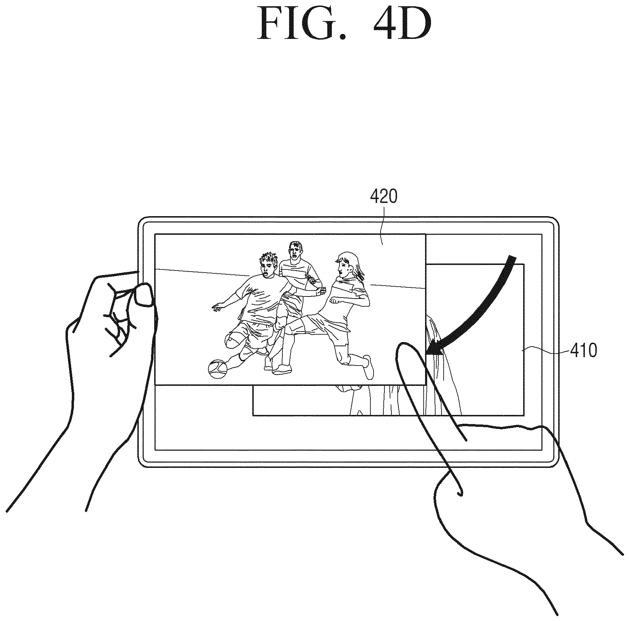

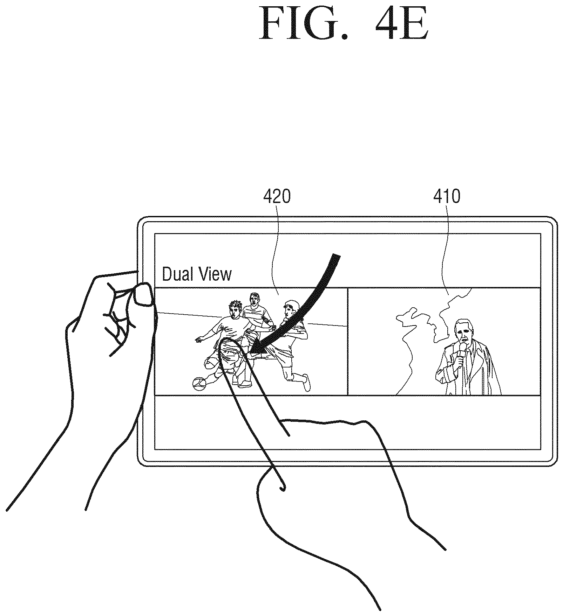

In the case in which a drag interaction turning a user touch toward one of left and right directions in a process in which the user touch moves in the downward direction is sensed, the controller 140 may control the display 110 to reduce and display the second broadcasting content 420 on a region corresponding to the direction toward which the user touch is turned and reduce and display the first broadcasting content 410 on a region corresponding to an opposite direction to the direction toward which the user touch is turned. For example, in the case in which a drag interaction turning the user touch toward one of the left and right directions in a process in which the user touch moves in the downward direction is sensed, the controller 140 may control the display 110 to gradually move the second broadcasting content 420 to a left region so as to correspond to the user touch, as illustrated in FIG. 4D. In this case, the controller 140 may reduce a size of the second broadcasting content 420 while the second broadcasting content 420 moves to a left region, and may also reduce a size of the first broadcasting content 410 so that the first broadcasting content 410 is gradually disposed on a right region. In addition, in the case in which the user touch arrives at any point of the left region of the display 110, the controller 140 may be operated in a dual mode in which the second broadcasting content 420 is displayed on the left region and the first broadcasting content 410 is displayed on a right region, as illustrated in FIG. 4E.

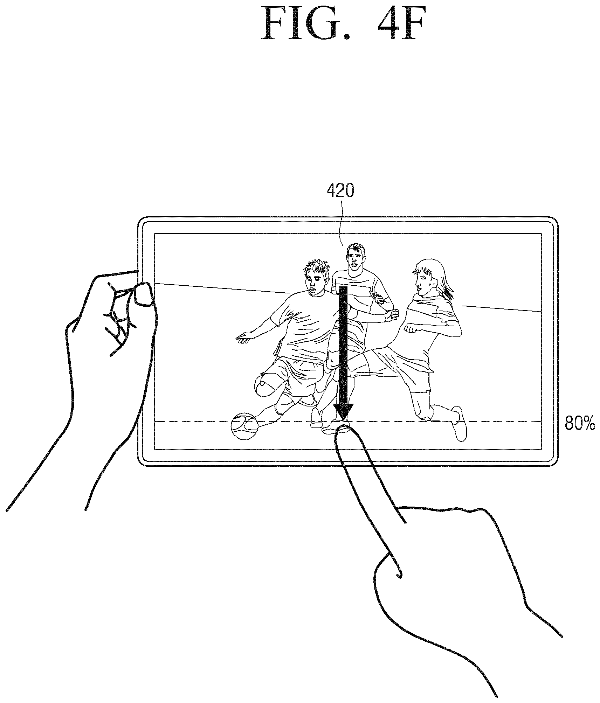

However, in the case in which the user touch is dragged by a preset distance or more in the downward direction while the second broadcasting content 420 moves in the downward direction depending on the drag interaction, the controller 140 may control the display 110 to display only the second broadcasting content on the display 110. In detail, in the case in which the user touch is dragged from the upper region to a point corresponding to 80% or more of a vertical length in the downward direction while the first broadcasting content 410 and the second broadcasting content 420 are simultaneously displayed, the controller 140 may control the display 110 to display the second broadcasting content 420 over the entire screen and remove the first broadcasting content 410, as illustrated in FIG. 4F.

Meanwhile, the second broadcasting content 420 displayed by the user terminal 100 and the second broadcasting content 420 displayed by the display device 200 may be synchronized and reproduced with each other. In detail, the controller 140 stores the second broadcasting content 420 processed by the image stream in a buffer, and outputs the second broadcasting content stored in the buffer using timestamp information included in the image stream, thereby making it possible to synchronize and output the second broadcasting content 420 with the second broadcasting content 420 of the display device 200.

The user may view the second broadcasting content 420 through the user terminal 100 through the process described with reference to FIGS. 4A to 4F.

In addition, the controller 140 may control the display 110 to change at least one of the first broadcasting content 410 and the second broadcasting content 420 that are simultaneously displayed into another content and display the changed content, depending on a user interaction.

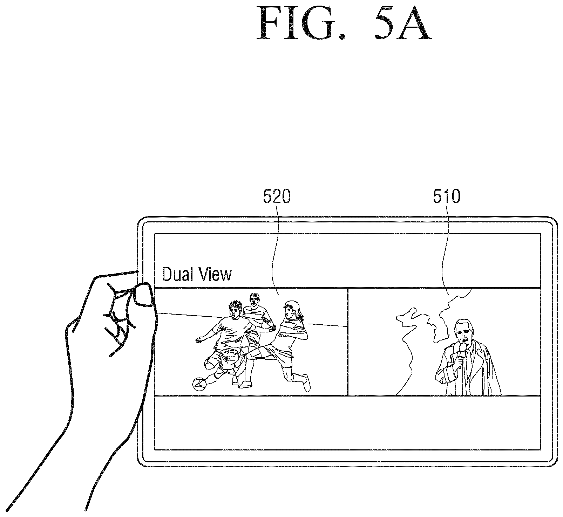

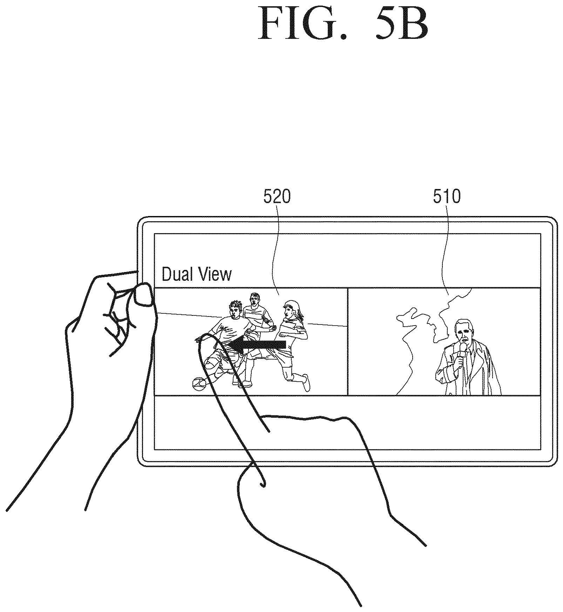

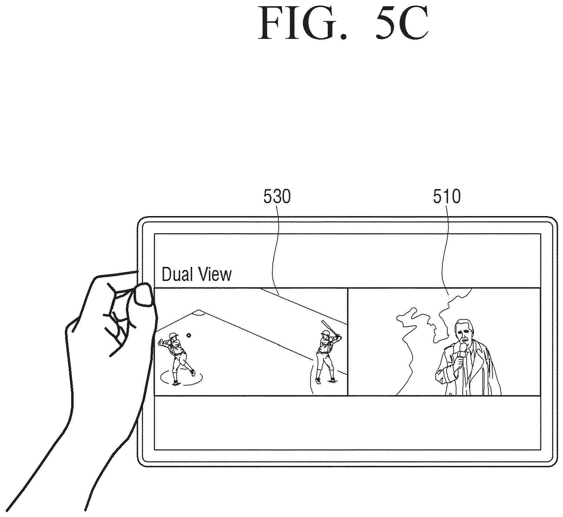

As an exemplar embodiment of the present disclosure, in the case in which a drag interaction touching a second broadcasting content 520 and then performing a drag in a left direction as illustrated in FIG. 5B is sensed while a first broadcasting content 510 and the second broadcasting content 520 are simultaneously displayed as illustrated in FIG. 5A, the controller 140 may control the communicator 120 to transmit a signal requesting a third broadcasting content 530 having a channel number previous to a channel number of the second broadcasting content 520 to the display device 200. In the case in which an image stream in which the first broadcasting content 510 and the third broadcasting content 530 are multiplexed is received from the display device 200, the controller 140 may control the image processor 170 to process the received image stream, and may control the display 110 to display the third broadcasting content 530 and the first broadcasting content 510 that are image-processed, as illustrated in FIG. 5C.

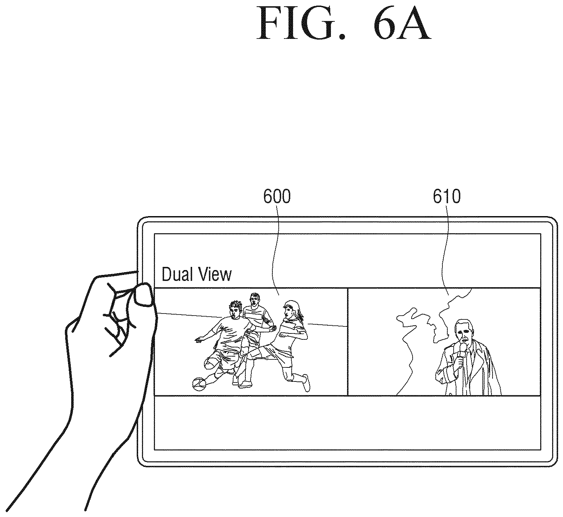

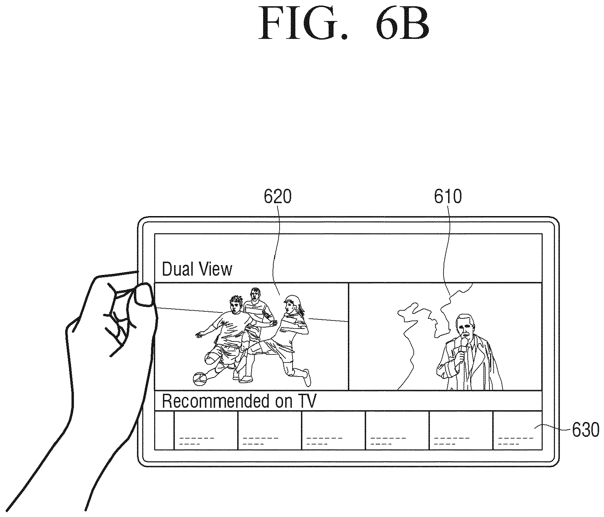

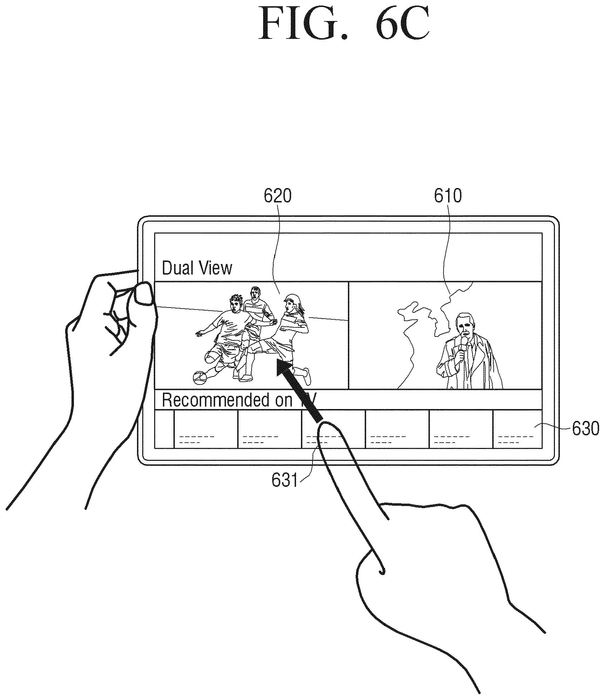

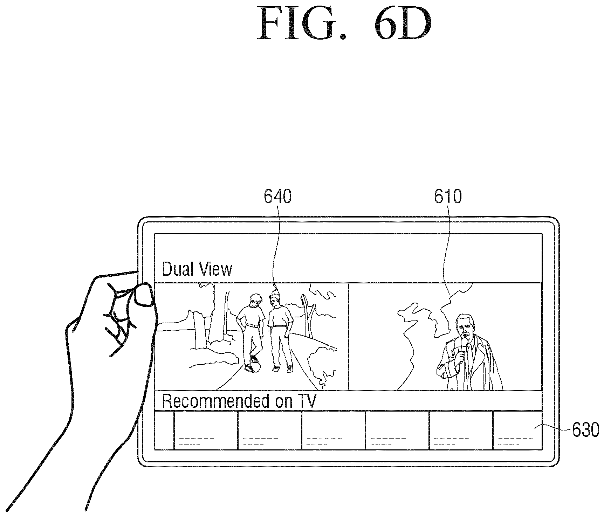

As another exemplary embodiment of the present disclosure, in the case in which a preset user command (for example, a user command touching a lower region of the display 110) is sensed while a first broadcasting content 610 and a second broadcasting content 620 are simultaneously displayed as illustrated in FIG. 6A, the controller 140 may control the display 110 to display a broadcasting content list 630 on the lower region of the display 110, as illustrated in FIG. 6B. In addition, in the case in which a drag interaction touching a first item 631 of a plurality of items included in the broadcasting content list and then performing a drag to a region in which the second broadcasting content 620 is displayed as illustrated in FIG. 6C is sensed, the controller 140 may control the communicator 120 to transmit a signal requesting a fourth broadcasting content 640 corresponding to the first item 631 to the display device 200. In the case in which an image stream in which the first broadcasting content 610 and the fourth broadcasting content 640 are multiplexed is received from the display device 200, the controller 140 may control the image processor 170 to process the received image stream, and may control the display 110 to display the fourth broadcasting content 640 and the first broadcasting content 610 that are image-processed, as illustrated in FIG. 6D.

The user may change an image content that he/she intends to view on the user terminal 100 through a method as illustrated in FIGS. 5A to 6D.

In addition, in the case in which a preset user interaction for one of a plurality of broadcasting contents is sensed while the user terminal 100 displays the plurality of broadcasting contents, the controller 140 may control the communicator 120 to transmit information on the broadcast content for which the preset user interaction is sensed to the display device 200.

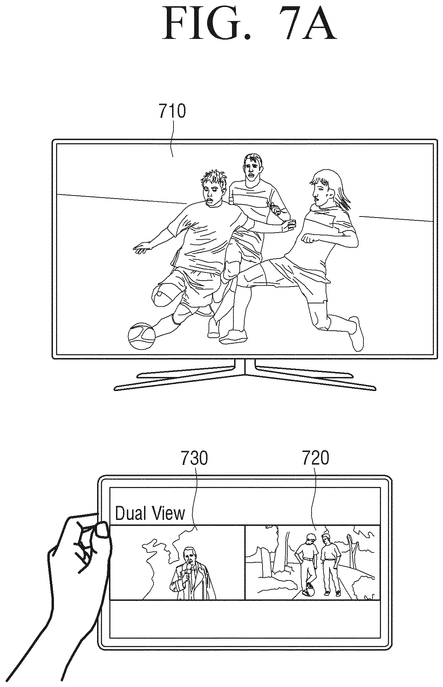

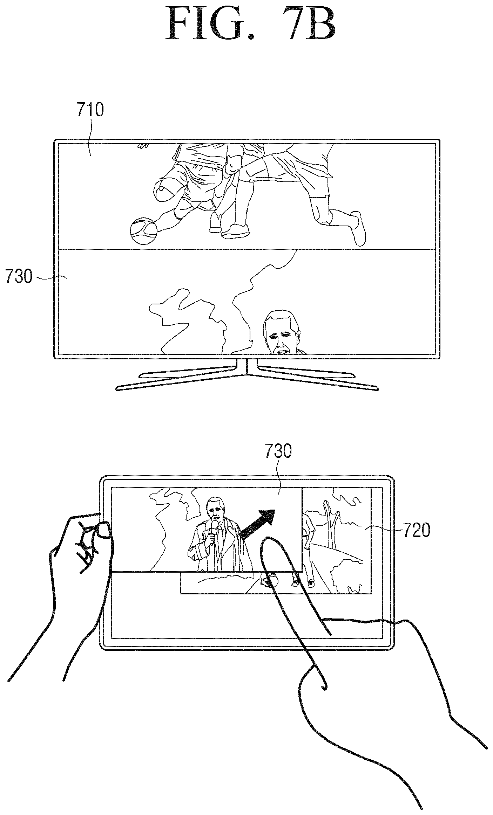

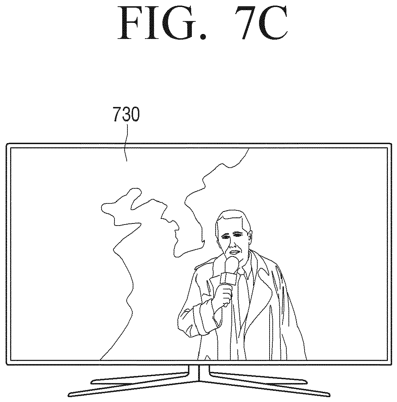

As an exemplary embodiment of the present disclosure, in the case in which a drag interaction touching a third broadcasting content 730 and then performing a drag in an upward direction is sensed through the sensor 130 while the display device 200 displays a first broadcasting content 710 and the user terminal 100 displays a second broadcasting content 720 and the third broadcasting content 730, as illustrated in FIG. 7A, the controller 140 may control the communicator 120 to transmit information on the third broadcasting content 730 to the display device 200. Here, the information on the third broadcasting content 730 may include ID information of the third broadcasting content 730, a control command for reproduction of the third broadcasting content 730, and information on a drag amount of the drag interaction. In addition, the display device 200 may display a partial region of the third broadcasting content 730, as illustrated in FIG. 7B, depending on a decided drag amount. In addition, the controller 140 of the user terminal 100 may also control the display 110 to display the other partial region of the third broadcasting content 730, as illustrated in FIG. 7B, depending on the decided drag amount. In addition, in the case in which the drag amount included in the information on the third broadcasting content 730 is a preset value or more, the display device 200 may display the third broadcasting content 730 over the entire screen, as illustrated in FIG. 7C.

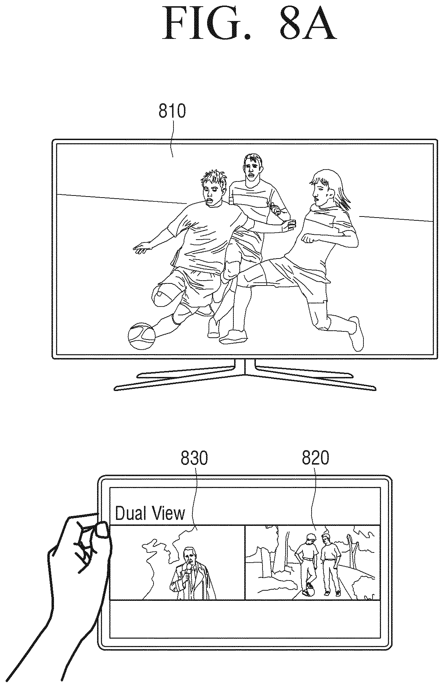

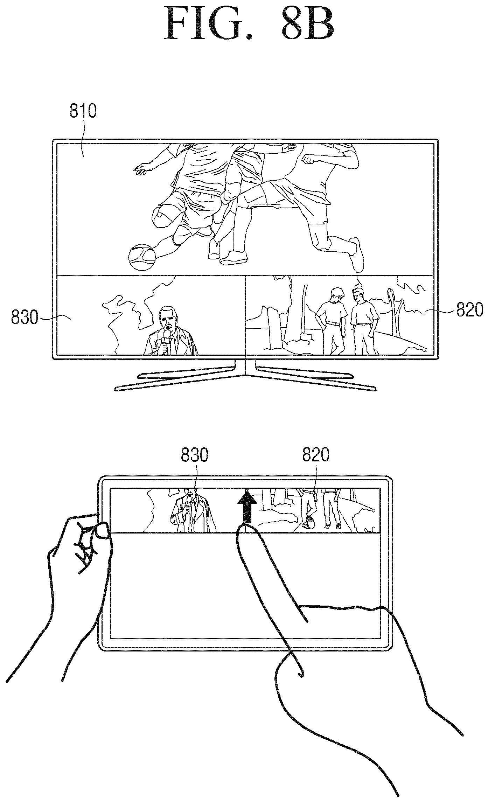

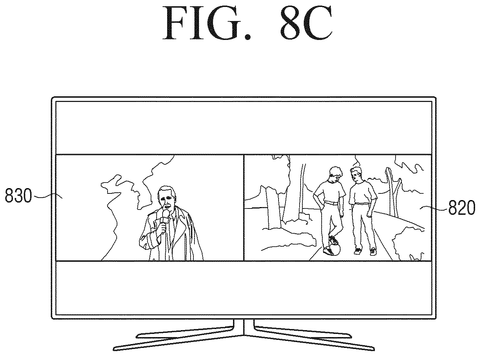

As another exemplary embodiment of the present disclosure, in the case in which a drag interaction touching a boundary line between a second broadcasting content 820 and a third broadcasting content 830 and then performing a drag in an upward direction is sensed through the sensor 130 while the display device 200 displays a first broadcasting content 810 and the user terminal 100 displays the second broadcasting content 820 and the third broadcasting content 830, as illustrated in FIG. 8A, the controller 140 may control the communicator 120 to transmit information on the second broadcasting content 820 and the third broadcasting content 830 to the display device 200. Here, the information on the second and third broadcasting contents 820 and 830 may include ID information of the second and third broadcasting contents 820 and 830, a control command for reproduction of the second and third broadcasting contents 820 and 830, and information on a drag amount of the drag interaction. In addition, the display device 200 may display partial regions of the second broadcasting content 820 and the third broadcasting content 830, as illustrated in FIG. 8B, depending on a decided drag amount. In addition, the controller 140 of the user terminal 100 may also control the display 110 to display the other partial regions of the second broadcasting content 820 and the third broadcasting content 820, as illustrated in FIG. 8B, depending on the decided drag amount. In addition, in the case in which the drag amount included in the information on the second and third broadcasting contents 820 and 830 is a preset value or more, the display device 200 may be operated in a dual mode in which it displays the second and third broadcasting contents 820 and 830 over the entire screen, as illustrated in FIG. 8C.

The user may more intuitively view an image content that he/she views through the user terminal 100 through the display device 200, through the process as described above with reference to FIGS. 7A to 8C.

Meanwhile, although a case in which the image content is the broadcasting content received from the display device 200 has been described in FIGS. 4A to 8C, this is only an example, that is, the image content may be a VOD content received from an external server. In this case, the image contents reproduced by the display device 200 and the user terminal 100 may be synchronized and reproduced with each other using timestamp information stored in the external server.

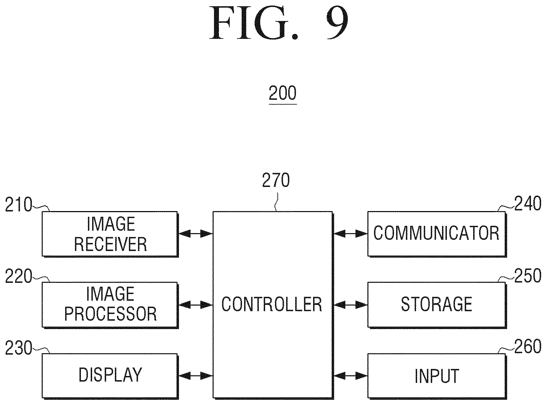

Next, the display device 200 will be described in more detail with reference to FIG. 9. As illustrated in FIG. 9, the display device 200 includes an image receiver 210, an image processor 220, a display 230, a communicator 240, a storage 250, an input 260, and a controller 270.

The image receiver 210 receives an image stream from the outside. Particularly, the image receiver 210 may receive an image stream including a broadcasting content from an external broadcasting station, and may receive an image stream including a VOD image content from an external server.

Particularly, the image receiver 210 may include a plurality of tuners in order to display a plurality of broadcasting contents or transmit the plurality of broadcasting contents to an external user terminal 100. Here, the image receiver 210 may include two tuners. However, this is only an example, and the image receiver 210 may also include three or more tuners.

The image processor 220 may process the image stream received through the image receiver 210. In detail, the image processor 220 may process the image stream so that only one image content is displayed in the case in which it is operated in a single mode, and may process the image stream so that two image contents are displayed in the case in which it is operated in a dual mode. Particularly, in the case in which information on the image content is received from the user terminal 100, the image processor 220 may process the image content depending on a drag amount of a drag interaction.

The display 230 displays at least one image content depending on a control of the controller 270. Particularly, the display 230 may display one image content in the case in which it is operated in a single mode, and may display a plurality of image contents in the case in which it is operated in a dual mode.

The communicator 240 performs communication with various external apparatuses. Particularly, the communicator 240 may perform communication with the external user terminal 100. In detail, the communicator 240 may transmit the image content to the user terminal 100, and receive information on the image content including a control command from the user terminal 100.

The storage 250 stores various data and programs for driving the display device 200 therein. Particularly, the storage 250 may include a buffer temporally storing the image content therein so as to synchronize and display the image content with the image content of the user terminal 100. The buffer may output the image content to the image processor 220 or the display 230 using timestamp information included in the image stream.

The input 260 receives various user commands input for controlling the display device 200. Here, the input 260 may be a remote controller. However, this is only an example, the input 260 may be various input devices such as a pointing device, a motion input device, an audio input device, a mouse, a keyboard, and the like.

The controller 270 may control a general operation of the display device 200. In detail, the controller 270 may control the communicator 240 to transmit a first image content to the user terminal 100. Here, the controller 270 may control the display 230 to display a second image content.

In addition, in the case in which a content request signal for the second image content is received from the user terminal 100 through the communicator 240, the controller 270 may control the image processor 220 to multiplex the first image content and the second image content to generate an image stream. In addition, the controller 270 may control the communicator 240 to transmit the multiplexed image stream to the user terminal 100.

In addition, in the case in which information on a second image content including a content switch command is received from the user terminal 100 through the communicator 240 while the first image content is displayed, the controller 270 may control the display 230 to remove the first image content from a display screen and display the second image content. Here, in the case in which information on a second image content and a third image content including a content switch command is received from the user terminal 100, the controller 270 may control the display 230 to be operated in a dual mode of removing the first image content from the display screen and simultaneously displaying the second and third image contents.

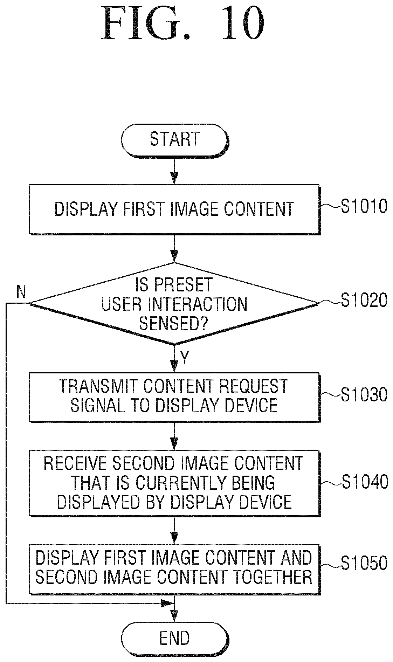

FIG. 10 is a flow chart for describing a method for controlling a user terminal 100 according to an exemplary embodiment of the present disclosure.

First, the user terminal 100 displays the first image content (S1010). Here, the first image content may be an image content received from the display device 200. However, this is only an example, the first image content may be another image content.

Then, the user terminal 100 decides whether or not a preset user interaction is sensed (S1020). Here, the preset user interaction may be a drag interaction touching an upper region of a touch screen of the user terminal and then performing a drag in a downward direction.

In the case in which the preset user interaction is sensed (S1020-Y), the user terminal 100 transmits a content request signal to the display device 200 (S1030).

Then, the user terminal 100 receives the second image content that is currently being displayed by the display device 200 from the display device 200 in response to the content request signal (S1040).

Then, the user terminal 100 displays the first image content and the second image content together (S1050). Here, the user terminal 100 may be operated in a dual mode in which it displays the first image content on a left region and displays the second image content on a right region.

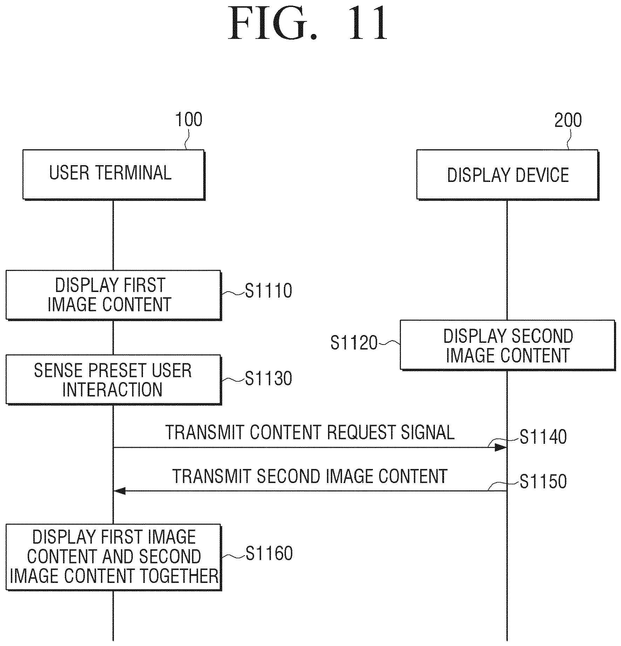

FIG. 11 is a sequence view for describing a method for controlling a multimedia system according to an exemplary embodiment of the present disclosure.

First, the user terminal 100 displays the first image content (S1110), and the display device 200 displays the second image content (S1120).

Then, the user terminal 100 senses a preset user interaction (S1130). Here, the preset user interaction may be a drag interaction touching an upper region of a touch screen and then performing a drag in a downward direction.

Then, the user terminal 100 transmits a content request signal to the display device 200 (S1140). Here, the content request signal may be a signal requesting a content that is currently being displayed by the display device 200.

Then, the display device 200 transmits the second image content to the user terminal 100 (S1150).

Then, the user terminal 100 displays the first image content and the second image content together (S1160). Here, the second image content reproduced by the user terminal 100 and the second image content reproduced by the display device 200 may be synchronized and reproduced with each other.

The user may more easily confirm the image content displayed by the display device 200 through the user terminal 100, by the exemplary embodiment of the present disclosure as described above.

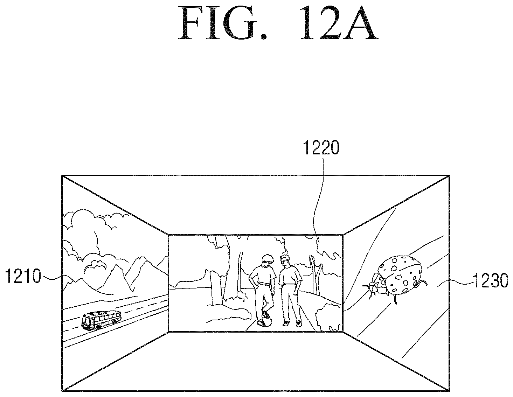

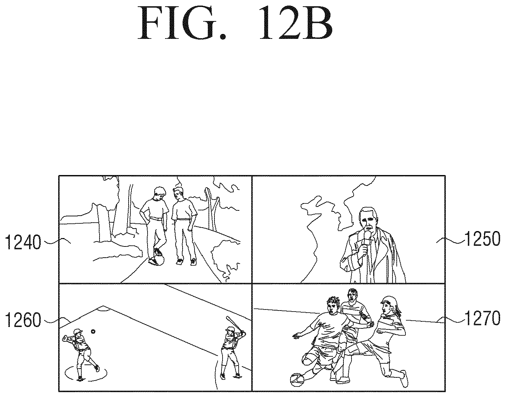

Meanwhile, although a case in which the user terminal 100 or the display device 200 may simultaneously display two image contents has been described in the exemplary embodiment described above, this is only an example, and the user terminal 100 or the display device 200 may simultaneously display three or more image contents. For example, the user terminal 100 or the display device 200 may simultaneously display three image contents 1210, 1220, and 1230 as illustrated in FIG. 12A or may display four image contents 1240, 1250, 1260, and 1270 as illustrated in FIG. 12B. In detail, in the case in which a preset user interaction is sensed while the user terminal 100 simultaneously displays two image contents, the user terminal 100 may transmit a signal requesting an image content that is currently being displayed by the display device 200 to the display device 200. In the case in which the image content that is currently being displayed by the display device 200 is received from the display device 200, the user terminal 100 may display three image contents including the two image contents that have been already displayed and the received image content, as illustrated in FIG. 12A.

In addition, the methods for controlling a display device according to the various exemplary embodiments described above may be implemented by a program to thereby be provided to the display device. In detail, a non-transitory computer readable medium in which a program including the method for controlling a display device is stored may be provided.

The non-transitory computer-readable medium is not a medium that stores data therein for a while, such as a register, a cache, a memory, or the like, but means a medium that semi-permanently stores data therein and is readable by a device. In detail, various applications or programs described above may be stored and provided in the non-transitory computer-readable medium such as a compact disk (CD), a digital versatile disk (DVD), a hard disk, a Blu-ray disk, a universal serial bus (USB), a memory card, a read only memory (ROM), or the like.

Although the exemplary embodiments of the present disclosure have been illustrated and described hereinabove, the present disclosure is not limited to the above-mentioned specific exemplary embodiments, but may be variously modified by those skilled in the art to which the present disclosure pertains without departing from the scope and spirit of the present disclosure as disclosed in the accompanying claims. These modifications should also be understood to fall within the scope of the present disclosure.

## Claims

1. A method for controlling a user terminal, comprising:
displaying a first image content;
transmitting a signal requesting an image content to an external display device in the case in which a preset user interaction is sensed; and displaying the first image content and a second image content together in the case in which the second image content that is currently being displayed by the display device is received from the display device.

2. The method for controlling a user terminal as claimed in claim 1, wherein the preset user interaction is a drag interaction touching an upper region of a touch screen of the user terminal and then performing a drag in a downward direction, and
in the displaying of the first image content and the second image content together, a display amount of the second image content is decided depending on a drag amount of the drag interaction, and a portion of the second image content is displayed together with the first image content depending on the decided display amount.

3. The method for controlling a user terminal as claimed in claim 2, wherein in the displaying of the first image content and the second image content together, the second image content is reduced and displayed on a region corresponding to a direction toward which the user touch is turned and the first image content is reduced and displayed on a region corresponding to an opposite direction to the direction toward which the user touch is turned, in the case in which a drag interaction turning the user touch toward one of left and right directions in a process in which the user touch moves in the downward direction is sensed.

4. The method for controlling a user terminal as claimed in claim 2, wherein in the displaying of the first image content and the second image content together, the second image content is displayed over an entire screen and the first image content is removed, in the case in which the user touch is dragged by a preset distance or more in the downward direction while the first image content and the second image content are simultaneously displayed depending on the drag interaction.

5. The method for controlling a user terminal as claimed in claim 1, further comprising changing a touched image content into another image content and displaying the changed image content, when a drag interaction touching one of the first image content and the second image content and then performing a drag in one of left and right directions is sensed.

6. The method for controlling a user terminal as claimed in claim 5, wherein in the case in which the first image content and the second image content are broadcasting contents,
in the changing of the touched image content into another image content and the displaying of the changed image content, the touched broadcasting content is changed into a broadcasting content of a channel different from a channel corresponding to the touched broadcasting content depending on a direction of the drag interaction and the changed broadcasting content is displayed.

7. The method for controlling a user terminal as claimed in claim 1, further comprising:
displaying a content list in the vicinity of the first image content and the second image content in the case in which a preset user command is input; and
changing a dragged image content into a third image content and displaying the third image content, in the case in which a drag interaction touching the third image content of a plurality of image contents included in the content list and then performing a drag to one of the first image content and the second image content is sensed.

8. The method for controlling a user terminal as claimed in claim 1, further comprising transmitting information on the first image content to the display device in the case in which a user command touching the first image content and then performing a drag in an upward direction is input,
wherein the display device displays the first image content on a display screen in the case in which the information on the first image content is received.

9. The method for controlling a user terminal as claimed in claim 1, further comprising transmitting information on the first image content and the second image content to the display device in the case in which a user command touching a boundary line between the first image content and the second image content and then performing a drag in an upward direction is input,
wherein the display device simultaneously displays the first image content and the second image content on a display screen in the case in which the information on the first image content and the second image content is received.

10. The method for controlling a user terminal as claimed in claim 1, wherein in the displaying of the first image content, an image stream for the first image content is received from the display device and is displayed, and
in the displaying of the first image content and the second image content together an image stream in which the first image content and the second image content are multiplexed is received from the display device and is displayed.

11. The method for controlling a user terminal as claimed in claim 1, wherein the display device displays the second image content while the user terminal displays the first image content and the second image content, and
the display device and the user terminal synchronize and display the second image contents with each other using timestamp information included in metadata of the second image content.

12. A user terminal interworking with a display device, comprising:
a display displaying a first image content;
a communicator performing communication with the display device;
a sensor sensing a user interaction; and
a controller controlling the communicator to transmit a signal requesting an image content to the display device in the case in which a preset user interaction is sensed through the sensor and controlling the display to display the first image content and a second image content together in the case in which the second image content that is currently being displayed by the display device is received from the display device.

13. The user terminal as claimed in claim 12, wherein the preset user interaction is a drag interaction touching an upper region of a touch screen of the user terminal and then performing a drag in a downward direction, and
the controller decides a display amount of the second image content depending on a drag amount of the drag interaction, and controls the display to display a portion of the second image content together with the first image content depending on the decided display amount.

14. The user terminal as claimed in claim 13, wherein the controller controls the display to reduce and display the second image content on a region corresponding to a direction toward which the user touch is turned and reduce and display the first image content on a region corresponding to an opposite direction to the direction toward which the user touch is turned in the case in which a drag interaction turning the user touch toward one of left and right directions in a process in which the user touch moves in the downward direction is sensed through the sensor.

15. The user terminal as claimed in claim 13, wherein the controller controls the display to display the second image content over an entire screen and remove the first image content, in the case in which the user touch is dragged by a preset distance or more in the downward direction while the first image content and the second image content are simultaneously displayed depending on the drag interaction.
